# EUROPÄISCHE PATENTSCHRIFT

(11) **EP 1 636 101 B1**
(45) Veröffentlichungstag und Bekanntmachung des Hinweises auf die Patenterteilung: **12.03.2008**
(21) Anmeldenummer: 04739960.5
(22) Anmeldetag: 16.06.2004
(51) Int. Cl.: B65D 1/24, B29C 45/14

(54) **KUNSTSTOFFBEHÄLTER MIT EINLEGETEIL**
PLASTIC CONTAINER COMPRISING AN INSERT
CONTENANT EN PLASTIQUE COMPRENANT UN INSERT

(30) Priorität: 24.06.2003 DE 10328392
(43) Veröffentlichungstag der Anmeldung: 22.03.2006
(73) Patentinhaber: Schoeller Arca Systems Services GmbH, 82049 Pullach (DE)
(72) Erfinder: OSTER, Heinz, 82319 Starnberg (DE); GOMMER, Herman, 7761 DM Schoonebeek (NL)
(74) Vertreter: GROSSE BOCKHORNI SCHUMACHER
(86) Internationale Anmeldenummer: PCT/EP2004/006497
(87) Internationale Veröffentlichungsnummer: WO 2004/113183

(56) Entgegenhaltungen:
- EP-A- 0 490 165
- DE-A- 3 931 358
- DE-U- 29 505 600
- DE-U- 29 924 066

## Beschreibung

Die vorliegende Erfindung betrifft einen Kunststoffbehälter nach dem Oberbegriff des Anspruchs 1.

Kunststoffbehälter sind seit langem für die unterschiedlichsten Einsatzzwecke weit verbreitet. Diese Behälter und insbesondere Flaschenkästen werden seit langer Zeit aus Kunststoff gefertigt und haben bereits vielfältige Veränderungen erfahren, wie z.B. Teilbarkeit, Klappbarkeit, Gewichtsersparnis usw. Trotzdem besteht in diesem Sektor weiterhin großer Bedarf, Verbesserungen an Kunststoffbehältern vorzunehmen, da es weiterhin ein Bestreben ist, den Komfort für den Nutzer von derartigen Kunststoffbehältern, die z.B. den Behälter tragen müssen oder die den Behälter zur Aufbewahrung verwenden usw., zu verbessern. Darüber hinaus ist es auch erforderlich, die Gestaltungsmöglichkeiten für Kunststoffbehälter weiter zu erweitern, da die Kunststoffbehälter zunehmend auch als Verkaufsverpackungen eingesetzt werden und somit als Marketinginstrument eingesetzt werden.

Es ist deshalb Aufgabe der vorliegenden Erfindung, einen Kunststoffbehälter, insbesondere Flaschenkasten, zur Verfügung zu stellen, bei dem die Gestaltungsmöglichkeiten insbesondere für das ästhetische Erscheinungsbild erweitert und der Komfort für den Nutzer, insbesondere beim Tragen des Behälters verbessert wird. Gleichzeitig soll jedoch die Herstellung des Kunststoffbehälters und der Einsatz effektiv und wirtschaftlich erfolgen.

Diese Aufgabe wird gelöst durch einen Kunststoffbehälter mit den Merkmalen des Anspruchs 1, welcher den aus DE 299 24 066 U bekannten Behälter weiter bildet. Vorteilhafte Gestaltungen sind Gegenstand der abhängigen Ansprüche.

Gemäß der vorliegenden Erfindung wird der Tragekomfort und die Gestaltungsvariabilität von Kunststoffbehältern dadurch erhöht, dass in der Behälterwandung, also in den Seitenwänden, Boden oder Deckel des Kunststoffbehälters neben einem ersten Kunststoff, der hauptsächlich für die Herstellung des Kunststoffbehälters eingesetzt wird, bzw. mehreren ersten Kunststoffen zumindest ein zweiter oder ein aus mehreren Kunststoffen gebildeter zweiter Kunststoffbereich vorgesehen ist, der sich teilweise von einer Oberflächenseite der Behälterwandung durch die gesamte Dicke der Behälterwandung zur gegenüberliegenden Oberflächeseite erstreckt und somit zusammen mit dem ersten bzw. ersten Kunststoffen insbesondere in komplementärer Weise die Behälterwandung bildet. Dies hat den Vorteil, dass mittels des oder der zweiten Kunststoffe spezielle Eigenschaften, die von dem oder den ersten Kunststoffen nicht erfüllt werden können, realisiert werden können, wie z.B. insbesondere besonderes ästhetisches Aussehen in bestimmten Behälterbereichen oder besonders weiches, angenehmes Griffverhalten, insbesondere im Bereich von Griffausnehmungen. Durch die Maßnahme, dass sich der zweite Kunststoff zumindest teilweise über die gesamte Dicke der Behälterwandung erstreckt, ist auch ein besonders einfaches Herstellungsverfahren gegeben, da ohne große Änderungen an den Spritzgussformen der zweite Kunststoff als separates Einlegeteil in die Spritzgussform eingelegt werden kann, ohne dass besondere Haltemaßnahmen für das Einlegeteil erforderlich wären. Das Einlegeteil wird nämlich insbesondere bei elastischer Ausbildung des Einlegeteils durch eine elastische Kompression zwischen den Seitenwänden der Form automatisch gehalten, ohne dass es hierfür zusätzlicher Maßnahmen oder Anpassungen der Spritzgussform bedürfte.

Das aus dem oder den zweiten Kunststoffen gebildete Einlegeteil nimmt eine Form an, wobei es durch zumindest teilweises Umgießen mit dem ersten Kunststoff in der Behälterwandung mit entsprechend ausrechender Festigkeit aufgenommen werden kann. Das Einlegeteil weist dabei eine Gitterstruktur mit Lamellenstruktur mit einseitig oder zweiseitig hervorstehenden Lamellen bzw. Lamellenabschnitten auf, da diese Formen ein besonders gutes Eingießen in den ersten Kunststoff und/oder gleichmäßige Lastverteilung bzw. Anbindung des ersten Kunststoffs an den zweiten Kunststoff ermöglichen. Bei Bedarf können in den entsprechenden Einlegeteilen auch Gusskanäle vorgesehen werden, um ein Eingießen des aus dem oder den zweiten Kunststoffen gebildeten Einlegeteils zu ermöglichen.

Als weitere vorteilhafte Gestaltung eines Einlegeteils ist die Auslegung des Einlegeteils als Mehrkomponenten- bzw. Zweikomponenten-Teil zu nennen. Hier kann insbesondere ein poröses, schaumförmiges Kernmaterial, welches insbesondere auch zur Verbindung mit dem ersten Kunststoff genutzt werden kann, vorgesehen werden, welches von einem Oberflächenmaterial mit anderen Eigenschaften, wie z.B. weichen, gummielastischen Eigenschaften zumindest teilweise überzogen ist. Neben der Verbesserung der Anbindung von erstem Kunststoff zum Einlegeteil bietet diese Ausführungsform auch den Vorteil der weiteren Erhöhung der Gestaltungsvielfalt und der Möglichkeit von Einsparungseffekten, da besonders hochwertiges Material lediglich als Oberflächenmaterial eingesetzt werden kann.

Zur gegenseitigen Verzahnung von Oberflächenmaterial mit Kernmaterial können entsprechende Ausnehmungen, Vertiefungen, Nuten und dergleichen vorgesehen sein, so dass sich eine entsprechende Verzahnung ausbildet.

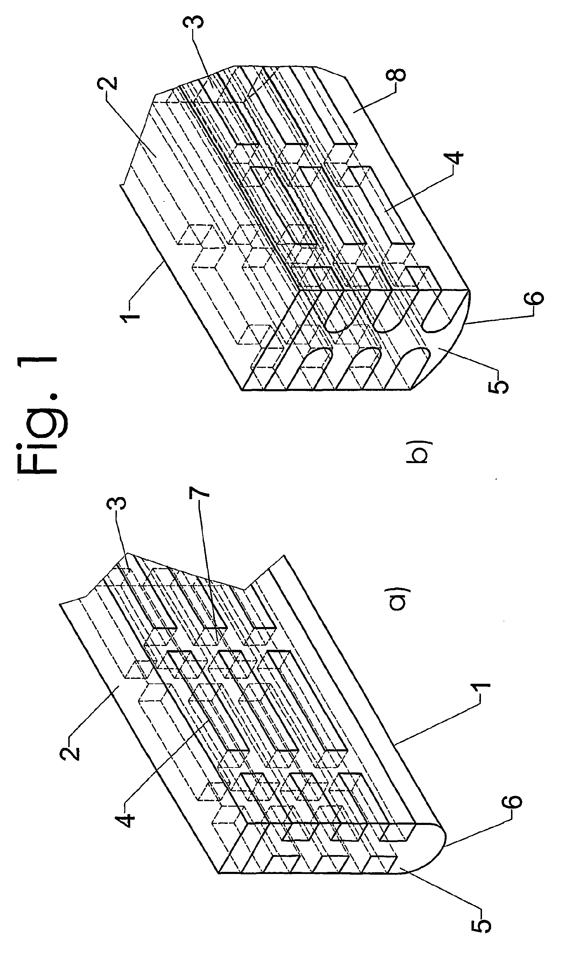

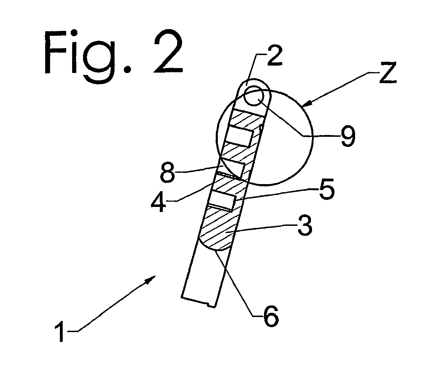

Weitere Vorteile, Kennzeichen und Merkmale der vorliegenden Erfindung werden bei der nachfolgenden detaillierten Beschreibung von bevorzugten Ausführungsbeispielen anhand der beigefügten Zeichnungen deutlich, wobei allein Figuren 1 und 2 erfindungsgemäße Ausführungsformen zeigen. Die Zeichnungen zeigen dabei in rein schematischer Weise in
- Fig. 1: a) und b) einen perspektivischen Ausschnitt einer Behälterwandung gemäß einer ersten Ausführungsform der Erfindung;
- Fig. 2: eine Schnittansicht eines Teils einer Behälterwandung gemäß einer zweiten Ausführungsform der Erfindung;
- Fig. 3: eine Seitenansicht eines Teils einer anders gestalteten Behälterwandung und ein Detail aus dieser Seitenansicht;
- Fig. 4: eine perspektivische Ansicht eines Halbzeugs aus dem zweiten Kunststoff;
- Fig. 5: a) bis c) Seitenansichten eines weiteren Halbzeugs aus dem zweiten Kunststoff;
- Fig. 6: eine perspektivische Ansicht eines Teils einer Behälterwandung;
- Fig. 7 und 8: weiteres perspektivische Ansichten von Teilen der Behälterwandung.

Fig. 1 zeigt in den Teilbildern a) und b) Teilansichten einer Behälterwandung 1 eines erfindungsgemäßen Kunststoffbehälters, bei der die Behälterwandung 1 aus zwei unterschiedlichen Kunststoffen 2 und 3 gebildet ist. Der in der Fig. 1 dargestellte Bereich der Behälterwandung 1 ist der Bereich eines Flaschenkastens über der Griffaussparung, an dem die Hand des Trägers anliegt. Entsprechend ist dort der zweite Kunststoff 3 aus einem weichen, gummielastischem Material gebildet, wobei insbesondere am unteren Rand 6 der Behälterwandung 1, also dem oberen Rand der Griffausnehmung, das weiche und elastische Material vorliegt, um in dem Bereich, in dem die größte Belastung in der Hand des Trägers auftritt, ein besonders angenehmes und weiches Material zur Verfügung zu stellen.

Der zweite Kunststoff 3 ist in der Form einer Grundplatte 5 mit beidseitig hervorstehenden Lamellen 4 bzw. Lamellenabschnitten ausgebildet, wobei das untere Ende 6 der Grundplatte 5 bzw. die dort vorgesehenen Lamellen 4 abgerundet sind, um eine Griffform zu bilden.

Der erste Kunststoff 2, der den überaus größten Teil des Kunststoffbehälters bzw. Flaschenkastens bildet, ist in der Behälterwandung oberhalb des zweiten Kunststoffs 3 sowie in den zwischen den Lamellenbereichen vorgesehenen vertikalen Kanälen 7 und horizontalen Kanälen 8, die durch die Lamellen gebildet werden, angeordnet, um so eine kompakte, mit im Wesentlichen glatten Oberflächen ausgebildete Behälterwandung 1 zu bilden.

Durch die spezifische Form des zweiten Kunststoffs 3, welcher vorzugsweise als Einlegeteil bzw. als Halbzeug in eine Spritzgussform eingelegt und anschließend mit dem ersten Kunststoff 2 umgossen wird, bietet ein entsprechender Kunststoffbehälter beispielsweise dem Träger durch die zur Verfügungstellung von weichen und elastischen Bereichen an der Behälterwandung 1, nämlich im Bereich der Lamellen 4 sowie am oberen Rand 6 einer Griffausnehmung ein angenehmes Trageempfinden und eine vorteilhafte Lastaufnahme. Da sich das Einlegeteil aus dem zweiten Kunststoff 3 über die gesamte Dicke der Behälterwandung 1 erstreckt, ist bei der Herstellung eine aufwändige Anpassung der Spritzgussform nicht notwendig, da das Einlegeteil 3 in einfacher Weise zwischen den Seitenwänden, die die Spritzgussform in diesem Bereich bildet, eingelegt wird und durch elastische Verspannung selber gehalten wird, ohne dass zusätzliche Maßnahmen getroffen werden müssen.

Eine weitere Ausführungsform einer entsprechenden Behälterwandung bzw. eines Kunststoffbehälters ist in der Schnittansicht der Fig. 2 dargestellt. Auch hier ist ein Einlegeteil aus einem zweiten Kunststoff 3 vorgesehen, welches am unteren Ende 6 eine Griffabrundung aufweist. Allerdings ist die Grundplatte 5 lediglich an einer Seite, nämlich der Außenseite mit Lamellen 4 vorgesehen, die wieder zwischen sich Kanäle 8 bilden, welche mit dem ersten Kunststoff 2 beim Einspritzen aufgefüllt werden. Auf diese Weise wird erreicht, dass an der Innenseite vollflächig im Griffbereich das zweite, weiche und elastische Kunststoffmaterial 3 vorliegt.

Eine Besonderheit der Ausführungsform der Fig. 2 stellt die Ausbildung des oberen Endes der Behälterwandung 1 dar, in welchem der erste Kunststoff 2 vorliegt. Hier ist durch das bekannte sogenannte "airmold"-Verfahren (Einblastechnik) ein Hohlkörper 9 an der Behälterwandung 1 geschaffen worden, der einerseits zu einer Materialeinsparung und damit zu einer Gewichtsreduzierung beim Kunststoffbehälter führt und andererseits gleichzeitig eine ausreichende Stabilität gewährleistet. Damit wird ersichtlich, dass das erfindungsgemäße Verfahren zur Herstellung von Kunststoffbehältern mit mindestens zwei verschiedenen Kunststoffen durch Einlegen von entsprechenden Einlegeteilen auch mit anderen Verfahrensmaßnahmen, wie z.B. dem "airmold"-Verfahren in geeigneter Weise kombiniert werden kann. Gleiches gilt für andere bekannte Spritzgießtechniken.

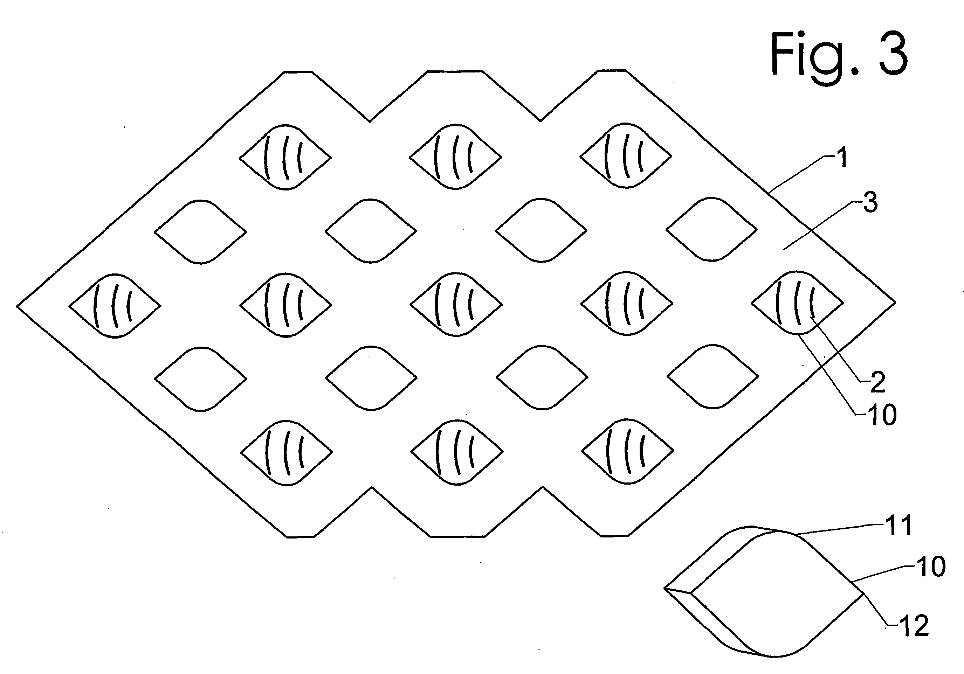

Fig. 3 zeigt in einer Seitenansicht wiederum einen Teil einer Behälterwandung, bei dem statt des Lamellenkörpers der vorangegangenen Ausführungsformen eine Gitterstruktur aus dem zweiten Kunststoff 3 eingebaut ist. Die Gitterstruktur 3 weist sogenannte Wabenöffnungen 10 auf, in die der erste Kunststoff 2 beim Fertigungsprozess eingegossen wird. Hierzu können entweder im Einlegeteil 3 oder in der Spritzgussform entsprechende Gießkanäle vorgesehen sein.

Wie die Detailansicht der Wabenöffnung 10 zeigt, ist diese linsenförmig ausgebildet, wobei die Wabenwand 11 zwischen den beiden gegenüber liegenden spitzen Enden 12 bogenförmig geführt ist. Diese Form ermöglicht eine besonders gute Ausfüllung der Gitterstruktur aus dem zweiten Kunststoff 3 mit dem ersten Kunststoff 2, wobei zusätzlich bei entsprechender Anordnung der Verbindungslinie der spitzen Enden 12 der Waben 10 senkrecht zur Hauptlastrichtung eine besonders günstige Lastübertragung ermöglicht wird.

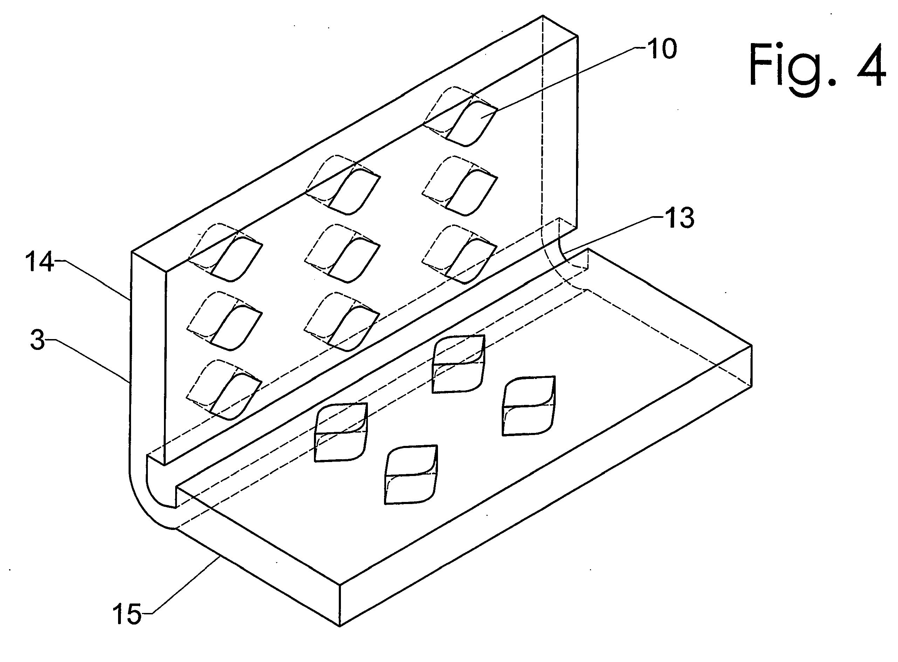

Fig. 4 zeigt in einer ebenfalls perspektivischen Ansicht eine vorteilhaft Ausgestaltung des zweiten Kunststoffs 3 als Halbzeug, nämlich als klappbares Einlegeteil, ein sogenanntes "Buch-Einlegeteil". Das Einlegeteil 3 der Fig. 4 ähnelt mit seiner Gitterstruktur der Seitenteile 14 und 15 der Ausführungsform, die in Fig. 3 beschrieben worden ist. Allerdings ist die Gitterstruktur hier in zwei Seitenteilen 14 und 15 vorgesehen, die über ein Filmscharnier 13 miteinander verbunden sind. Auf diese Weise ist es in einfacher Art möglich, die Seitenteile des Einlegeteils 3 in den Oberflächenbereichen der späteren Behälterwandung 1 vorzusehen, während zwischen den Seitenteilen 14 und 15 der erste Kunststoff 2 angeordnet werden kann. Darüber hinaus ermöglicht diese Form eine einfache Herstellung.

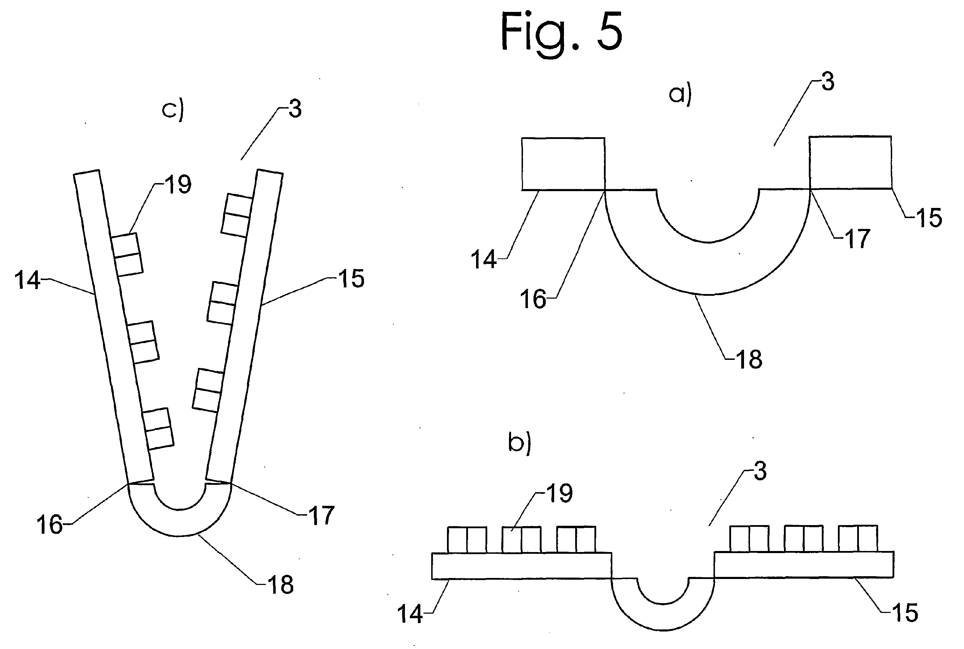

Eine weitere Ausführungsform dieses sogenannten "Buch-Einlegeteils" ist in den Figuren 5a) bis c) in einer Querschnittsansicht dargestellt. Wie in dem Teilbild a) zu sehen ist, sind die Seitenteile 14 und 15 hier nicht durch ein einzelnes Filmscharnier miteinander verbunden, sondern durch zwei Filmscharniere 16 und 17, wobei zwischen den Filmscharnieren 16 und 17 ein Griffteil 18 mit U-förmiger Querschnittsform vorgesehen ist, welches im eingebauten Zustand des Einlegeteils 3 an der Oberseite einer Griffaussparung eines Kunststoffbehälters zu liegen kommt. Mit dieser Ausführungsform ist es insbesondere möglich, dickere Behälterwandungen mit dem sogenannten "Buch-Einlegeteil" herzustellen und gleichzeitig eine angenehme Griffausbildung zu realisieren.

Wie insbesondere in den Teilbildern b) und c) der Fig. 5 zu sehen ist, werden vorzugsweise an den Innenseiten der Seitenteile 14 und 15 entsprechende Abstandshalter oder Rastelemente 19 vorgesehen, die zum einen die Seitenteile 14 und 15 im entsprechenden Abstand zueinander halten und/oder die Seitenteile 14 und 15 fest miteinander verbinden. Die Abstands- und/oder Rastelemente 19 sind vorzugsweise versetzt zueinander angeordnet, um ein Einfließen des ersten Kunststoffs 2 in den Zwischenraum zwischen den Seitenteilen 14 und 15 bei der Herstellung zu ermöglichen.

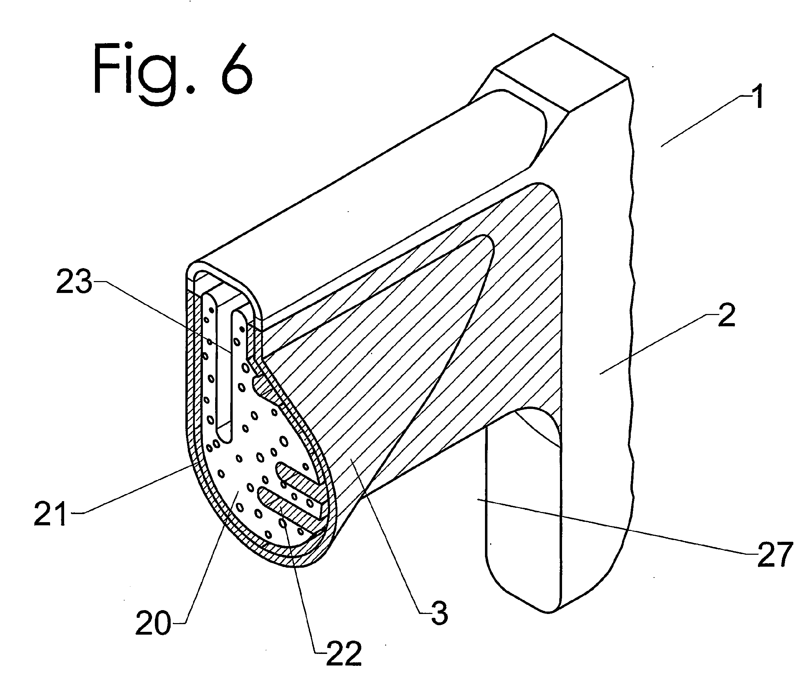

In Fig. 6 ist wiederum in einer perspektivischen Teilansicht ein Teil einer Behälterwandung 1 im Bereich oberhalb einer Griffaussparung 27 zu sehen. Das dort vorgesehene Einlegeteil 3 aus dem zweiten bzw. den zweiten Kunststoffen ist als Mehrkomponenten-Teil, insbesondere Zweikomponenten-Teil ausgebildet und weist in seinem unteren Bereich, also am oberen Rand der Griffausnehmung 27 eine Verdickung aus, so dass ein besonders angenehmer Tragekomfort erzielt wird.

Das Mehr- bzw. Zweikomponenten-Einlegeteil 3 ist aus einem Kern 20 aus einem porösen, schaumartigen Material gebildet, welches von einem weichen, gummielastischen Oberflächenmaterial 21 umgeben ist, welches insbesondere auf den Kern 20 aufgespritzt ist. Durch die poröse Struktur des Kernmaterials 20 ist eine besonders gute und innige Verbindung zwischen Kernmaterial 20 und Oberflächenmaterial 21 gewährleistet. Dies kann auch dadurch zusätzlich verstärkt werden, dass entsprechende Ausnehmungen oder Kanäle 22 in dem Kernmaterial 20 vorgesehen sind, so dass das Oberflächenmaterial 21 hier einfließen kann und eine Verzahnung mit dem Kernmaterial 20 bildet. Das entsprechend als Halbzeug ausgebildete Mehrkomponenten-Einlegeteil 3 wird wiederum in einfacher Weise in eine Spritzgussform eingelegt und durch die Seitenwände der Spritzgussform gehalten, wobei hier zusätzlich Dichtlippen oder Dichtflächen (nicht gezeigt) am Einlegeteil 3 vorgesehen sein können, so dass das Einlegeteil 3 selbst zumindest teilweise als Teil der Form dienen kann.

Der erste Kunststoff 2, der den weitaus größten Teil des Kunststoffbehälters bzw. Flaschenkastens bildet, wird dann in die Spritzgussform eingespritzt und umfließt zumindest in den vorgesehenen Bereichen, also hier im oberen und seitlichen Bereich das Einlegeteil 3. Zur besseren Verzahnung des ersten Kunststoffs 2 mit dem zweiten Kunststoff 3 ist hier in dem Mehrkomponenten-Teil 3 ebenfalls eine Ausnehmung bzw. Nut 23 vorgesehen, in die der erste Kunststoff 2 einfließen kann. Da auch der erste Kunststoff 2 hier in Kontakt mit dem porösen Kernmaterial 20 gelangt, wird auch hier eine besonders gute Verbindung zwischen erstem Kunststoff 2 und zweitem Kunststoff 3 in Form des Einlegeteils erzielt.

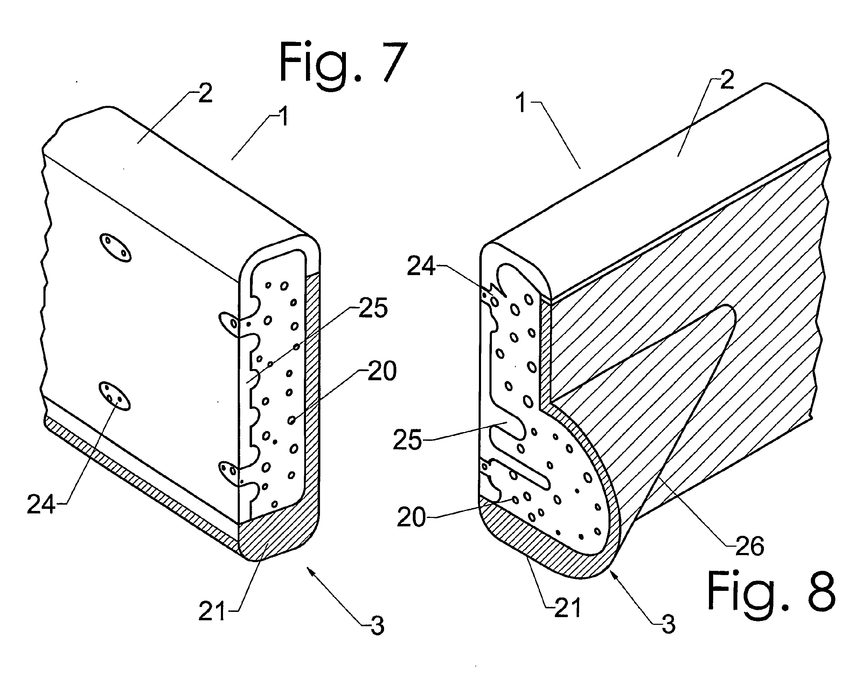

Fig. 7 und 8 zeigen jeweils in perspektivischen Teilansichten leichte Abwandlungen von Behälterwandungen 1 der Ausführungsform der Fig. 6. Bei beiden Ausführungsbeispielen ist der zweite Kunststoff 3 bzw. insbesondere das Oberflächenmaterial 21 des Mehrkomponenten-Teils 3 auf einer Seite, nämlich der Innenseite der Behälterwandung 1, konzentriert, wobei jedoch erfindungsgemäß durch entsprechende Vorsprünge 24 sich ein Teil des Mehrkomponenten-Einlegeteils 3 über die gesamte Dicke der Behälterwandung 1 erstreckt, um das vorteilhafte Herstellverfahren mit dem einfachen Einlegen des zweiten Kunststoffs bzw. der zweiten Kunststoffteile 3 in die Spritzgussform beibehalten zu können. Auch bei diesen Ausführungsformen, die in den Fig. 7 und 8 dargestellt sind, ist das Mehrkomponenten-Einlegeteil 3 aus einem porösen Kernmaterial 20 und einem weichen, gummielastischen Oberflächenmaterial 21 gebildet, wobei in dem Verbindungsbereich zwischen erstem Kunststoff 2 und zweitem Kunststoff 3 bzw. Kernmaterial 20 Vertiefungen bzw. Nuten 25 vorgesehen sind, um die Verzahnung zwischen erstem Kunststoff und zweitem Kunststoff-Einlegeteil 3 weiter zu verbessern. Während bei der Ausführungsform der Fig. 7 eine Vielzahl von dicht nebeneinander liegenden Kanälen 25, die eine wellige Verbindungsflächenform erzeugen, vorliegen, sind bei dem Ausführungsbeispiel der Fig. 8 lediglich zwei, dafür jedoch mit entsprechender Tiefe ausgebildete Nuten 25 vorgesehen.

## Patentansprüche

1. Kunststoffbehälter, insbesondere Flaschenkasten mit einer Behälterwandung (1), welche mindestens aus einem ersten Kunststoff (2) gebildet ist, wobei mindestens ein Bereich der Behälterwandung aus einem zweiten, vorzugsweise zu dem oder den ersten Kunststoffen (2) unterschiedlichen Kunststoff (3) ausgebildet ist, wobei der zweite Kunststoff sich zumindest teilweise von einer Oberflächenseite der Behälterwandung durchgehend über die gesamte Dicke der Behälterwandung zur gegenüberliegenden Oberflächenseite erstreckt und somit zumindest teilweise die Behälterwandung in Form eines Griffteils bildet, wobei der zweite Kunststoff von dem ersten Kunststoff zumindest teilweise umschlossen ist,
**dadurch gekennzeichnet, dass**
der zweite Kunststoff (3) in Form einer Gitterstruktur mit langgestreckten und lamellenartig vorstehenden Stegen ausgebildet ist, welche zusammen mit dem ersten Kunststoff (2) eine mit im wesentlichen glatten Oberflächen ausgebildete Behälterwandung bilden,
wobei der zweite Kunststoff (3) aus einem weichen Material gebildet ist, und wobei die Lamellen (4) in Längsrichtung des Griffteils mit Abstand zueinander zur Bildung von vertikalen Kanälen (7) für die Aufnahme des ersten Kunststoffes sowie in mehreren Reihen übereinander unter Bildung von sich horizontal erstreckenden Kanälen (8) zwischen den Lamellen (4) für die Aufnahme des ersten Kunststoffes (2) angeordnet sind, der die Lamellen in den Kanälen zur Bildung von glatten Behälterwänden umgibt,
wobei die Lamellen (4) Teil eines Lamellenkörpers sind, der eine Grundplatte (5) aufweist, von der ein- oder beidseitig die Lamellen (4) vorstehen,
und dass die Grundplatte (5) am unteren Ende des Griffteils oder dort angeordneten Lamellen zur Bildung einer gerundeten Griffform abgerundet ist bzw. sind,
und dass durch den zweiten Kunststoff (3) weiche und elastische Griffbereiche an der Behälterwandung im Bereich der Lamellen (4) sowie am unteren Ende des Griffteils gebildet sind.

2. Kunststoffbehälter nach Anspruch 1
**dadurch gekennzeichnet, dass** der zweite Kunststoffbereich (3) aus einem separaten Halbzeug gebildet ist.

3. Kunststoffbehälter nach einem der vorhergehenden Ansprüche,
**dadurch gekennzeichnet, dass** der zweite Kunststoffbereich (3) in Form eines Mehrkomponententeils, insbesondere als 2-Komponenten-Teil mit insbesondere einem Kern (20) und einer Oberflächenkomponente (21) ausgebildet ist.

4. Kunststoffbehälter nach einem der vorhergehenden Ansprüche,
**dadurch gekennzeichnet, dass** der zweite Kunststoffbereich (3) als Griffteil im Bereich einer Griffanordnung, insbesondere einer Griffausnehmung (27) angeordnet ist.

5. Kunststoffbehälter nach einem der vorhergehenden Ansprüche,
**dadurch gekennzeichnet, dass** der zweite Kunststoffbereich (3) sich gegenüber dem oder den ersten Kunststoffen (2) in seinen chemischen und/oder physikalischen Eigenschaften, insbesondere hinsichtlich Härte, Dehnbarkeit, Festigkeit, Schlagzähigkeit, Farbe, Zusammensetzung oder dergleichen unterscheidet und insbesondere ein Material umfasst, welches zumindest im Oberflächenbereich vorliegt und durch seine gummiartige Konsistenz ein weiches Griffverhalten erzeugt.

6. Kunststoffbehälter nach einem der Ansprüche 1 oder 2,
**dadurch gekennzeichnet, dass** der zweite Kunststoffbereich (3) mindestens ein poröses, schaumartiges Material und/oder einen Hohlkörper umfasst, welches vorzugsweise als Kernmaterial (20) vorliegt und und von einem weichen, gummiartigen Material (21) umschlossen ist.

7. Kunststoffbehälter nach einem der vorhergehenden Ansprüche,
**dadurch gekennzeichnet, dass** die Behälterwandung (1) im Bereich des zweiten Kunststoffs (3) massiv, im Wesentlichen ohne Ausnehmungen, Vertiefungen, Vorsprünge oder dergleichen ausgebildet ist und insbesondere an den Oberflächen im Wesentlichen glatt ist, wobei der erste (2) und der zweite (3) Kunststoff komplemetär zueinander die Behälterwandung bilden.

## Claims

1. A plastic container, particularly a bottle crate, including a container wall (1), which is formed of at least one first plastic element (2), whereby at least one region of the container wall is formed of a second plastic element, which is preferably different to the first plastic element(s) (2), wherein the second plastic element extends at least partially from one side surface of the container wall continuously over the entire thickness of the container wall to the opposite side surface and thus at least partially constitutes the container wall in the form of a handle portion, whereby the second plastic element is at least partly surrounded by the first plastic element, **characterised in that** the second plastic element (3) is in the form of a grid structure with elongate and bar-like projecting webs, which define together with the first plastic element (2) a container wall with substantially smooth surfaces, wherein the second plastic element is constituted by a soft material and wherein the bars (4) are arranged in the longitudinal direction of the handle portion with a spacing from one another to define vertical channels (7) for receiving the first plastic element and in a plurality of rows one above the other whilst forming horizontally extending channels (8) between the bars (4) for receiving the first plastic element (2), which surrounds the bars in the channels to define smooth container walls, wherein the bars (4) are part of a bar body, which includes a base plate (5), from which the bars (4) project on one or both sides, and that the base plate (5) is rounded at the lower end of the handle portion or bars arranged there to form a rounded handle shape and that soft and elastic handle regions are formed on the container wall in the region of the bars (4) and at the lower end of the handle portion by the second plastic element (3).

2. A plastic container as claimed in claim 1, **characterised in that** the second plastic region (3) is constituted by a separate semiproduct.

3. A plastic container as claimed in one of the preceding claims, **characterised in that** the second plastic region (3) is constructed in the form of a multiple-component member, particularly a two-component member, with, in particular, a core (20) and a surface component (21).

4. A plastic container as claimed in one of the preceding claims, **characterised in that** the second plastic region (3) is arranged in the form of a handle portion in the region of a handle arrangement, particularly a handle recess (27).

5. A plastic container as claimed in one of the preceding claims, **characterised in that** the second plastic region (3) differs from the first plastic element(s) (2) in its chemical and/or physical properties, particularly as regards hardness, elasticity, strength, impact toughness, colour, composition or the like, and in particular, includes a material which is present at least in the surface region and produces a soft gripping characteristic as a result of its rubber like consistency.

6. A plastic container as claimed in one of claims 1 or 2, **characterised in that** the second plastic region (3) includes at least one porous, foam-like material and/or a hollow body, which is preferably present in the form of core material (20) and is surrounded by a soft, rubber-like material (21).

7. A plastic container as claimed in one of the preceding claims, **characterised in that** the container wall (1) is of massive construction in the region of the second plastic element (3), substantially without openings, recesses, projections or the like and, in particular, is substantially smooth at the surfaces, whereby the first (2) and second (3) plastic elements define the container wall in a complementary manner.

## Revendications

1. Conteneur en matière plastique, en particulier un casier à bouteilles avec une paroi de conteneur (1) constituée d'au moins une première matière plastique (2), une zone au moins de la paroi étant constituée d'une deuxième matière plastique (3), de préférence différente de la ou des premières matières plastiques (2), la deuxième matière plastique s'étendant au moins en partie sur toute l'épaisseur de la paroi depuis une face de la paroi jusqu'à la face opposée et forme ainsi au moins partiellement la paroi sous la forme d'une poignée, la deuxième matière plastique étant au moins partiellement entourée par la première matière plastique, **caractérisé en ce que** la deuxième matière plastique (3) est réalisée sous forme d'une structure réticulaire avec des barres saillantes allongées à lamelles, laquelle structure réticulaire forme avec la première matière plastique (2) une paroi de conteneur à surfaces lisses, la deuxième matière plastique (3) étant constituée d'une matière tendre, les lamelles (4) étant écartées l'une de l'autre suivant la longueur de la poignée pour former des canaux verticaux (7) pour recevoir la première matière plastique, et les lamelles s'étendant l'une au-dessus de l'autre en plusieurs rangées pour réaliser des canaux (8) qui s'étendent horizontalement entre les lamelles (4) afin de recevoir la première matière plastique (2) qui entoure les lamelles dans les canaux afin de réaliser des parois de conteneur lisses,
les lamelles (4) étant une partie d'un corps lamellé qui forme un socle (5) sur lequel les lamelles forment saillies sur un ou les deux côtés,
**en ce que** le socle (5) est arrondi à l'extrémité inférieure de la poignée ou des lamelles disposées à cet endroit pour réaliser une poignée à profil arrondi,
et **en ce que** la deuxième matière plastique (3) forme des zones de préhension tendres et élastiques sur le paroi de conteneur dans la zone des lamelles (4) et à l'extrémité inférieure de la poignée

2. Conteneur en matière plastique selon la revendication 1, **caractérisé en ce que** la partie constituée de la deuxième matière plastique (3) est réalisée sous forme d'un produit semi-fini.

3. Conteneur en matière plastique selon l'une quelconque des revendications précédentes, **caractérisé en ce que** la partie constituée de la deuxième matière plastique (3) est réalisée sous forme d'une partie à plusieurs composants, en particulier une partie à deux composants avec notamment un noyau (20) et un composant (21) formant la surface extérieure.

4. Conteneur en matière plastique selon l'une quelconque des revendications précédentes, **caractérisé en ce que** la partie constituée de la deuxième matière plastique (3) est réalisée sous la forme d'une poignée dans la zone d'un agencement de préhension, en particulier un dégagement (27) pour la préhension.

5. Conteneur en matière plastique selon l'une quelconque des revendications précédentes, **caractérisé en ce que** la deuxième matière plastique (3) diffère de la ou des premières matières plastiques (2) par ses propriétés chimiques et/ou physiques, notamment concernant la dureté, la ductilité, la fermeté, la résilience, la couleur, la possibilité de combinaison ou analogues, et en particulier enveloppe un matériau qui est présent au moins dans la zone de la surface et qui, par sa consistance élastique, présente un contact doux pour la préhension.

6. Conteneur en matière plastique selon l'une quelconque des revendications 1 et 2, **caractérisé en ce que** la partie constituée de la deuxième matière plastique (3) entoure au moins un matériau cellulaire poreux et/ou un corps creux, qui se présente de préférence comme un noyau (20) et est entouré d'une matière élastique tendre (21).

7. Conteneur selon l'une quelconque des revendications précédentes, **caractérisé en ce que**, dans la partie constituée de la deuxième matière plastique (3), la paroi du conteneur (1) est massif, essentiellement sans cavités, creux, saillies ou analogues et est essentiellement lisse sur sa face extérieure, de sorte que la première matière plastique (2) et la deuxième matière plastique (3) forment la paroi du conteneur de manière complémentaire.
